# EUROPÄISCHE PATENTANMELDUNG

(11) **EP 3 284 964 A1**
(43) Veröffentlichungstag der Anmeldung: **21.02.2018**
(21) Anmeldenummer: 17182352.9
(22) Anmeldetag: 20.07.2017
(51) Int. Cl.: F16C 23/04, F16C 27/02, F16C 17/02, F01D 25/16, F02C 7/06

(54) **LAGEREINRICHTUNG EINES ABGASTURBOLADERS**

(30) Priorität: 16.08.2016 DE 102016215275
(71) Anmelder: Bosch Mahle Turbo Systems GmbH & Co. KG, 70376 Stuttgart (DE)
(72) Erfinder: AMMON, Volkhard, 72124 Pliezhausen (DE); KLEINSCHMIDT, Ruediger, 74354 Besigheim (DE); KLUSÁCEK, Michal, 161 00 Praha 6 (CZ); KUHNE, Oliver, 70374 Stuttgart (DE); SCHMITT, Steffen, 71254 Ditzingen (DE); STETTER, Frieder, 70191 70597 Stuttgart (DE)
(74) Vertreter: BRP Renaud & Partner mbB Rechtsanwälte Patentanwälte Steuerberater

(57) **Zusammenfassung**

Die vorliegende Erfindung betrifft eine Lagereinrichtung (1) eines Abgasturboladers (2), insbesondere für Kraftfahrzeugmotoren, zur Lagerung einer Welle (3) in einem Lagergehäuse (4) über eine innerhalb einer Nabe (5) axial und gegen Rotation schwimmend gelagerte Lagerbuchse (6), bei der durch einen, von der Nabe (5) radial in die Lagerbuchse (6) eingreifenden Stift (7) eine Lagesicherung der Lagerbuchse (6) gegen Rotation gegeben ist.

Zur Fixierung in Axialrichtung als auch zum Ermöglichen eines Verkippens der Lagerbuchse sind der Stift (7) und die Lagerbuchse (6) über eine sphärisch oder ballig gekrümmte Lagerfläche (9) aneinander gelagert.

## Beschreibung

Die vorliegende Erfindung betrifft eine Lagereinrichtung eines Abgasturboladers, insbesondere für Kraftfahrzeugmotoren, zur Lagerung einer Welle in einem Lagergehäuse, gemäß dem Oberbegriff des Anspruchs 1. Die Erfindung betrifft außerdem einen Abgasturbolader mit einer solchen Lagereinrichtung.

Aus der DE 10 2006 055 415 A1 ist eine gattungsgemäße Lagereinrichtung eines Abgasturboladers zur Lagerung einer gemeinsamen Turbine-/Verdichter-Welle in einer von einem Gehäuse des Abgasturboladers gebildeten und zwischen dem Turbinen- und Verdichterrad liegenden Nabe über eine innerhalb dieser Nabe schwimmend gegenüber gleichermaßen der Nabe und der Welle gelagerte Lagerbuchse bekannt. Vorgesehen ist dabei ein Lagerbereich, in dem einerseits zwischen Nabe und Lagerbuchse ein Nabenringkanal und andererseits zwischen Lagerbuchse und Welle ein Wellenringkanal vorliegt, wobei die beiden Ringkanäle miteinander kommunizieren. Durch einen, von der Nabe radial in die Lagerbuchse eingreifenden Stift ist darüber hinaus eine Lagesicherung der Lagerbuchse gegeben, wobei der radiale Stift den Nabenringkanal durchgreift. Des Weiteren vorgesehen ist, dass der Stift als mit dem Wellen- und/oder Nabenringkanal kommunizierender Ölzuführungskanal ausgebildet ist und dadurch die Herstellung der Lagereinrichtung vereinfachen soll.

Aus der DE 30 05 873 A1 ist ein Lageraufbau für sich schnell drehende Wellen bekannt, mit einem Gehäuse, einer hierdurch verlaufenden Bohrung und einem in der Bohrung angeordneten radialen Hülsenlager mit entgegengesetzten Enden, die sich über die Bohrung hinaus erstrecken. Verankerungsmittel des Hülsenlagers weisen dabei einen hohen Bolzen auf, der Druck- bzw.

Schubbelastungen aufnehmen kann. Ferner absorbiert das Hülsenlager jeglichen Schub auf die Welle, so dass deren axiale Verlagerung begrenzt ist.

Generell müssen Lagerbuchsen von Lagereinrichtungen bei Abgasturboladern in Axialrichtung sehr genau eingespannt werden, aber in einer dazu senkrechten Ebene frei beweglich bleiben und zusätzlich um eine Lagermitte kippbar sein, um gewisse Bewegungen ausgleichen zu können.

Nachteilig bei den aus dem Stand der Technik bekannten Lagerbuchsen und den diese fixierenden Stifte ist jedoch, dass zwar eine Fixierung der Lagerbuchse in Axialrichtung ermöglichen, eine Kippmöglichkeit jedoch nicht bieten und dadurch eine Lagerreibung erhöhen.

Die vorliegende Erfindung beschäftigt sich daher mit dem Problem, für eine Lagereinrichtung der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Lagerbuchse in einer Nabe einer Lagereinrichtung über eine Art Kugelgelenk zu lagern und dadurch sowohl eine Fixierung in Axialrichtung zu bewirken als auch ein Verkippen der Lagerbuchse zu ermöglichen. Die erfindungsgemäße Lagereinrichtung eines Abgasturboladers zur Lagerung einer Welle in einem Lagergehäuse des Abgasturboladers umfasst dabei eine die Welle aufnehmende Nabe, in welcher die Lagerbuchse angeordnet ist. Zumindest gegen Rotation ist die Lagerbuchse dabei durch einen, von der Nabe radial in die Lagerbuchse eingreifenden Stift gesichert. Erfindungsgemäß sind nun der Stift und die Lagerbuchse über zumindest eine sphärisch oder ballig gekrümmte Lagerfläche aneinander gelagert. Dabei ist selbstverständlich denkbar, dass an dem Stift eine konvexe und an der Lagerbuchse eine komplementär dazu ausgebildete konkave Lagerfläche angeordnet sein kann oder dass ausschließlich am Stift oder an der Lagerbuchse eine solche ballig gekrümmte Lagerfläche vorgesehen ist. Allen Ausführungsformen ist dabei jedoch gemein, dass der Stift sowohl eine Rotation als auch eine axiale Verschiebung der Lagerbuchse verhindert, ein Verkippen derselben jedoch ermöglicht, ohne dass dabei ein Verkanten damit und unter Umständen auch ein Verklemmen des Stiftes gegenüber der Lagerbuchse erfolgt. Durch die Kippmöglichkeit der Lagerbuchse können die Lagerreibung reduziert, die Wirtschaftlichkeit des Abgasturboladers erhöht und zugleich ein erheblicher Beitrag zur Verschleiß- und Geräuschreduzierung geleistet werden. Die technische Ausführung des sphärischen oder balligen Bereichs, d.h. der gekrümmten Lagerfläche, kann beispielsweise über eine Wälzlagerkugel erfolgen, die in eine Fase oder sphärische Mulde an der Lagerbuchse und/oder am Stift eingelegt wird. Die Fasen können auch durch Prägen der Kugel umgeformt werden, so dass sie an den Kontaktflächen sphärisch werden. Insbesondere bei weichen Werkstoffen kann dabei die Kante einer Fase mittels einer Kugel und einer Presse so umgeformt werden, dass sich der Kugelradius dort abbildet. Dies ist bei Kugelventilen vorteilhaft, um den Dichtsitz zu prägen und damit eine Leckage zu verringern.

Bei einer vorteilhaften Weiterbildung der erfindungsgemäßen Lösung ist zwischen einem der Lagerbuchse zugewandten Längsende des Stiftes und der Lagerbuchse eine Kugel angeordnet. Über eine derartige Kugel und eine an einer Außenmantelfläche der Lagerbuchse komplementär dazu ausgebildete sphärische Mulde, kann eine flächige Lagerung der beiden Komponenten aneinander erreicht werden und zwar unabhängig vom Kippwinkel der Lagerbuchse relativ zum Stift.

Bei einer vorteilhaften Weiterbildung der erfindungsgemäßen Lösung ist die Kugel als separates Bauteil oder einstückig mit dem Stift ausgebildet. Beide Ausführungsformen bieten dabei Vorteile, wobei insbesondere die einstückige Ausbildung der Kugel mit dem Stift, d.h. die Integration der Kugel in den Stift, eine Reduzierung der Bauteilanzahl und damit auch eine Reduzierung der Lager- und Logistikkosten sowie der Montagekosten ermöglicht. Rein theoretisch ist selbstverständlich aber auch denkbar, dass die Kugel als separates Bauteil ausgebildet sein kann, wodurch insbesondere eine erhöhte Flexibilität hinsichtlich der Herstellung der erfindungsgemäßen Lagereinrichtung erreicht werden kann.

Bei einer weiteren vorteilhaften Ausführungsform der erfindungsgemäßen Lösung weist der Stift zwei Teile auf, nämlich ein erstes, fest mit dem Lagergehäuse verbundenes, insbesondere verpresstes, Teil und ein gleitend in einem Stiftkanal des Lagergehäuses des Abgasturboladers gelagertes zweites Teil. Zwischen den beiden Teilen ist dabei eine Federeinrichtung angeordnet, insbesondere eine Tellerfeder oder eine Wellfeder, die das zweite Teil gegen die Lagerbuchse vorspannt. Hierdurch können insbesondere gleichbleibende Lagereigenschaften erreicht werden. Besonders die Ausbildung der Federeinrichtung als Tellerfeder ermöglicht hohe Vorspannkräfte bei gleichzeitig kleinem Federweg.

Bei einer weiteren vorteilhaften Ausführungsform der erfindungsgemäßen Lösung ist der Stift hohl ausgebildet und dient zugleich als Ölzuführung. In dieser Ausführungsform erfüllt der Stift gleichzeitig zwei Aufgaben, nämlich einerseits die Aufgabe der Schmierung der Lagerbuchse und andererseits die Aufgabe der Fixierung derselben in der Nabe. Durch diese Funktionsintegration zweier unterschiedlicher Funktionen in den Stift, erübrigen sich weitere Bauteile, wodurch die Teileanzahl reduziert werden kann. Alternativ ist selbstverständlich auch denkbar, dass der Stift massiv ausgebildet ist, was den großen Vorteil der einfachen und damit auch kostengünstigeren Herstellung mit sich bringt, andererseits jedoch eine separate Ölzuführung zur Lagerbuchse erfordert.

Die vorliegende Erfindung beruht weiter auf dem allgemeinen Gedanken, einen Abgasturbolader mit einer zuvor beschriebenen Lagereinrichtung auszustatten und dadurch eine einerseits zuverlässige, andererseits aber auch kostengünstige und optimale Lagerung einer Lagerbuchse in einem Lagergehäuse und damit einer Welle in der Lagerbuchse zu ermöglichen. Die verbesserte Lagerung durch die Kippmöglichkeit der Lagerbuchse reduziert die Lagerreibung und erhöht dadurch die Wirtschaftlichkeit des Abgasturboladers.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch eine erfindungsgemäße Lagereinrichtung eines erfindungsgemäßen Abgasturboladers,
- Fig. 2: eine in Darstellung wie in Fig. 1, jedoch bei einer anders ausgestalteten Lagereinrichtung,
- Fig. 3: eine erfindungsgemäße Lagereinrichtung mit einem massiven Stift.

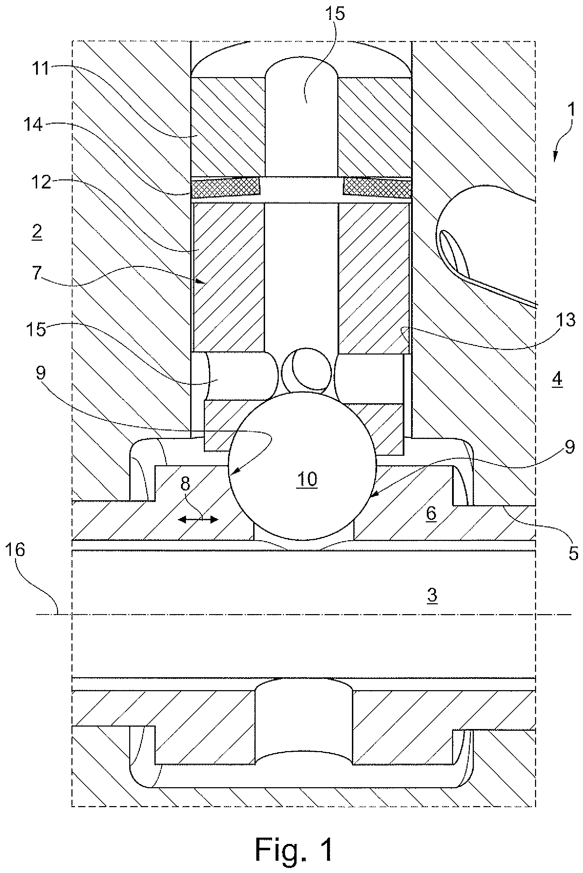

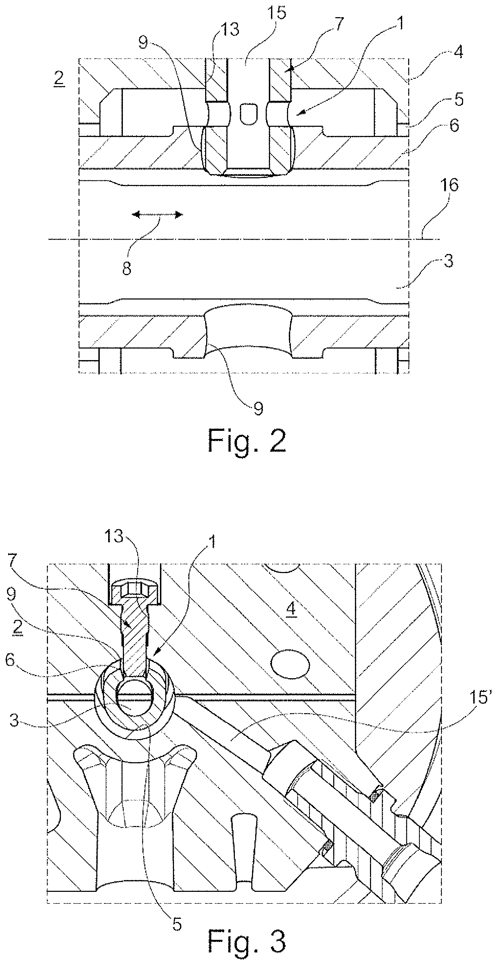

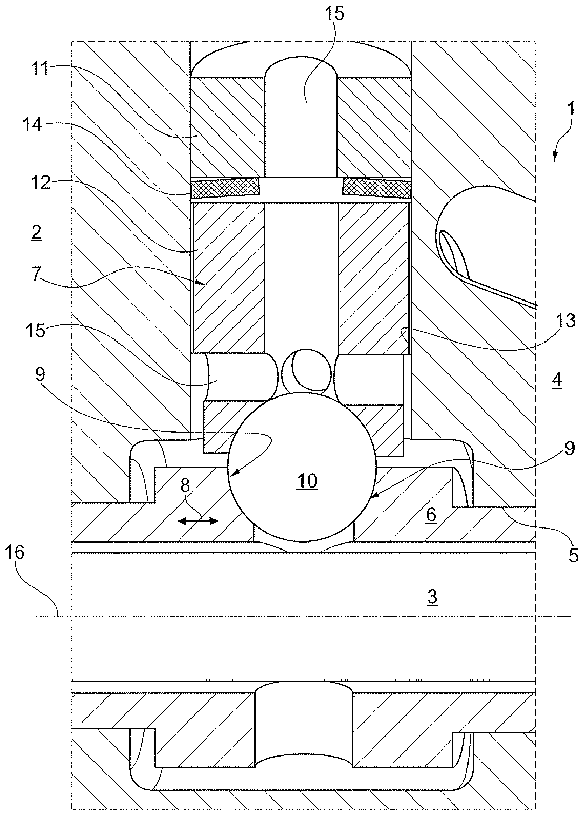

Entsprechend den Fig. 1 bis 3, weist eine erfindungsgemäße Lagereinrichtung 1 eines Abgasturboladers 2, insbesondere für Kraftfahrzeugmotoren, zur Lagerung einer Welle 3 in einem Lagergehäuse 4 eine innerhalb einer Nabe 5 vorzugsweise axial und gegen Rotation schwimmend gelagerte Lagerbuchse 6 auf. Bei der Lagereinrichtung 1 ist durch einen, von der Nabe 5 radial in die Lagerbuchse 6 eingreifenden Stift 7, der auch als Befestigungsstift bzw. Lagerstift bezeichnet werden kann, eine Lagesicherung der Lagerbuchse 6 zumindest gegen Rotation, aber auch gegen eine Bewegung in Axialrichtung 8 gegeben. Erfindungsgemäß sind nun der Stift 7 und die Lagerbuchse 6 über eine sphärisch gekrümmte Lagerfläche 9 (vgl. Fig. 1) oder eine ballig gekrümmte Lagerfläche 9 (vgl. Fig. 2 und 3) aneinander gelagert. Die gekrümmte Lagerfläche 9 kann dabei wie in Fig. 1 gezeigt ist, sowohl direkt oder indirekt am Stift 7 als auch an der Lagerbuchse 6 oder aber wie in Fig. 2 gezeigt ist, ausschließlich am Stift 7 oder ausschließlich an der Lagerbuchse 6 angeordnet sein.

Betrachtet man die Fig. 1, so kann man erkennen, dass zwischen einem der Lagerbuchse 6 zugewandten Längsende des Stiftes 7 und der Lagerbuchse 6 eine Kugel 10 angeordnet ist, so dass zwischen der Lagerbuchse 6 und dem Stift 7 eine Art Kugelgelenk besteht. Die Kugel 10 kann dabei als separates Bauteil ausgebildet sein oder aber einstückig mit dem Stift 7 hergestellt werden. Gemäß der Fig. 1 ist dabei an der Lagerbuchse 6 eine zur Kugel 10 komplementäre Lagerfläche 9 vorgesehen, welche ein Verkippen der Lagerbuchse 6 relativ zur Axialrichtung 8 zumindest in gewissem Umfang ermöglicht, die Lagerbuchse 6 jedoch in Axialrichtung fixiert.

Betrachtet man die Ausführungsform der erfindungsgemäßen Lagereinrichtung 1 gemäß Fig. 1 weiter, so kann man erkennen, dass der Stift 7 zwei Teile 11 und 12 aufweist, nämlich ein erstes, fest mit dem Lagergehäuse 4 verbundenes, insbesondere verpresstes, Teil 11 und ein gleitend in einem Stiftkanal 13 gelagertes zweites Teil 12. Zwischen den beiden Teilen 11, 12 ist dabei eine Federeinrichtung 14 angeordnet, die das zweite Teil 12 gegen die Lagerbuchse 6 vorspannt und sich dabei am ersten Teil 11 abstützt. Die Federeinrichtung 14 kann dabei beispielsweise als Tellerfeder oder als Wellfeder ausgebildet sein. Beide genannten Federarten stehen dabei jedoch rein exemplarisch und ermöglichen auf vergleichsweise kurzem Federweg vergleichsweise hohe Federkräfte. Über die Federeinrichtung 14 kann insbesondere langfristig ein optimales Lagern der Lagerbuchse 6 über die sphärische oder ballig gekrümmte Lagerfläche 9 ermöglicht werden.

Betrachtet man die Fig. 1 und 2 weiter, so kann man erkennen, dass der Stift 7 hohl ausgebildet ist und dadurch zugleich die Funktion einer Ölzuführung übernimmt und im Inneren einen Ölkanal 15 zur Verfügung stellt. Demgegenüber ist der Stift 7 gemäß der Fig. 3 massiv ausgebildet, so dass in diesem Fall die Ölzuführung zur Lagerbuchse 6 über einen separaten Ölkanal 15' erfolgt. Zugleich ist der gemäß der Fig. 3 dargestellte Stift 7 über ein Gewinde in den Stiftkanal 13 einschraubbar.

Betrachtet man nochmals die Fig. 2, so kann man erkennen, dass an dem Stift 7 eine ballige Lagerfläche 9 ausgebildet ist, während in der unteren Bildhälfte der Fig. 2 die ballig gekrümmte Lagerfläche 9 im Bereich der Lagerbuchse 6 angeordnet ist. Vorzugsweise sind dabei komplementär zueinander ausgebildete Lagerflächen 9 sowohl an dem Stift 7 als auch an der Lagerbuchse 6 vorgesehen, wobei jedoch auch bereits lediglich eine ausschließlich am Stift 7 oder an der Lagerbuchse 6 sphärisch oder ballig gekrümmte Lagerfläche 9 zur Verwirklichung der erfindungsgemäßen Idee ausreicht.

Allen gezeigten Ausführungsformen ist dabei gemein, dass über die sphärisch oder ballig gekrümmte Lagerfläche 9 der Stift 7 und die Lagerbuchse 6 zwar in Axialrichtung 8 aneinander fixiert, um eine Achse 16 jedoch kippbar zueinander gelagert sind, wodurch eine Winkelausgleichsfunktion geschaffen werden kann, die einen erheblichen Beitrag zur Verschleiß- und Geräuschreduzierung leistet.

## Patentansprüche

1. Lagereinrichtung (1) eines Abgasturboladers (2), insbesondere für Kraftfahrzeugmotoren, zur Lagerung einer Welle (3) in einem Lagergehäuse (4) über eine innerhalb einer Nabe (5) gelagerte Lagerbuchse (6), bei der durch einen, von der Nabe (5) radial in die Lagerbuchse (6) eingreifenden Stift (7), eine Lagesicherung der Lagerbuchse (6) zumindest gegen Rotation gegeben ist,
**dadurch gekennzeichnet,**
**dass** der Stift (7) und die Lagerbuchse (6) über eine sphärisch oder ballig gekrümmte Lagerfläche (9) aneinander gelagert sind.

2. Lagereinrichtung nach Anspruch 1,
**dadurch gekennzeichnet,**
**dass** zwischen einem der Lagerbuchse (6) zugewandten Längsende des Stiftes (7) und der Lagerbuchse (6) eine Kugel (10) angeordnet ist.

3. Lagereinrichtung nach Anspruch 2,
**dadurch gekennzeichnet,**
**dass** die Kugel (10) als separates Bauteil oder einstückig mit dem Stift (7) ausgebildet ist.

4. Lagereinrichtung nach Anspruch 2 oder 3,
**dadurch gekennzeichnet,**
**dass** an der Lagerbuchse (6) eine zur Kugel (10) komplementäre Lagerfläche (9) vorgesehen ist.

5. Lagereinrichtung nach einem der vorhergehenden Ansprüche,
**dadurch gekennzeichnet,**
**dass** der Stift (7) zwei Teile (11,12) aufweist, nämlich ein erstes, fest mit dem Lagergehäuse (4) verbundenes, insbesondere verpresstes, Teil (11) und ein gleitend in einem Stiftkanal (13) des Lagergehäuses (4) gelagertes zweites Teil (12).

6. Lagereinrichtung nach Anspruch 5,
**dadurch gekennzeichnet,**
**dass** zwischen den beiden Teilen (11,12) eine Federeinrichtung (14) angeordnet ist, die das zweite Teil (12) gegen die Lagerbuchse (6) vorspannt.

7. Lagereinrichtung nach Anspruch 6,
**dadurch gekennzeichnet,**
**dass** die Federeinrichtung (14) als Tellerfeder oder als Wellfeder ausgebildet ist.

8. Lagereinrichtung nach Anspruch 1,
**dadurch gekennzeichnet,**
**dass** ausschließlich am Stift (7) oder an der Lagerbuchse (6) eine sphärisch oder ballig gekrümmte Lagerfläche (9) angeordnet ist.

9. Lagereinrichtung nach einem der vorhergehenden Ansprüche,
**dadurch gekennzeichnet,**
- **dass** der Stift (7) hohl ausgebildet ist und als Ölzuführung dient, oder
- **dass** der Stift (7) massiv ausgebildet ist.

10. Abgasturbolader (2) mit einer Lagereinrichtung (1) nach einem der vorhergehenden Ansprüche.
